# EUROPEAN PATENT APPLICATION

(11) **EP 4 741 444 A1**
(43) Date of publication of application: **13.05.2026**
(21) Application number: 24839590.7
(22) Date of filing: 02.07.2024
(51) Int. Cl.: C08G 77/54, C08G 77/06

(54) **ORGANOPOLYSILOXANE HAVING TERTIARY AMINO GROUP IN MOLECULAR CHAIN AND METHOD FOR PRODUCING SAME**

(30) Priority: 07.07.2023 JP 2023112193
(71) Applicant: SHIN-ETSU CHEMICAL CO., LTD., Tokyo 100-0005 (JP)
(72) Inventor: WATANABE Takuma, Annaka-shi, Gunma 379-0224 (JP)
(74) Representative: V.O.
(86) International application number: PCT/JP2024/023930
(87) International publication number: WO 2025/013698

(57) **Abstract**

[Object] One of the purposes of the present invention is to provide an organopolysiloxane that is an intermediate compound for providing a silicone macromer having a quaternary ammonium cation site in a molecular chain in which a (meth)acrylic group is introduced in a high percentage at both terminals.

[Solution] The present invention provides an organopolysiloxane having a tertiary amino group in a molecular chain represented by the following general formula (1): 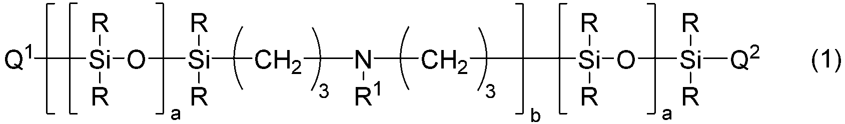 wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a hydrogen atom or a group represented by the following formula (2), at least one of Q¹ and Q² is a hydrogen atom; "a" is an integer of 1 to 400; and "b" is an integer of 1 to 50; 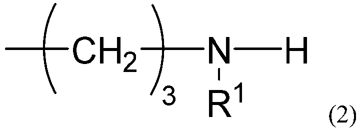 wherein, in formula (2), R¹ is a group selected from an alkyl group having 1 to 10 carbon atoms, an aryl group having 6 to 10 carbon atoms, and an aralkyl group having 7 to 10 carbon atoms.

## Description

### TECHNICAL FIELD

The present invention relates to an organopolysiloxane having a tertiary amino group in a molecular chain, and a method for producing the same.

### BACKGROUND ART

Silicone is widely used as a contact lens material due to its high oxygen permeability. However, since silicone is hydrophobic, the introduction of hydrophilic groups is being considered to make the contact lens surface hydrophilic. Among such considerations, the introduction of quaternary ammonium cation sites in silicone chains has been reported (Patent Literature 1 to 4). Among such reports, Patent Literature 1 describes a method for synthesizing a silicone macromer having a polymerizable group at both terminals and having a quaternary ammonium cation site in a molecular chain.

### PRIOR LITERATURE

### PATENT LITERATURE

Patent Literature 1: JP National Phase Laid-Open No. 2009-542855
Patent Literature 2: JP National Phase Laid-Open No. 2009-533532
Patent Literature 3: JP National Phase Laid-Open No. 2010-516873
Patent Literature 4: JP National Phase Laid-Open No. 2009-521547

### SUMMARY OF THE INVENTION

### PROBLEM TO BE SOLVED BY THE INVENTION

However, it is inferred that in a production method according to Patent Literature 1, a certain amount of silicone without polymerizable groups is contained as an impurity. It is unfavorable for silicone that is typically used as a contact lens material to contain a large amount of compounds without polymerizable groups. It is therefore desirable to establish a method for producing a silicone macromer having a quaternary ammonium cation site in a molecular chain in which a (meth)acrylic group is introduced in a high percentage at both terminals.

One of the purposes of the present invention is to provide an organopolysiloxane that is an intermediate compound for providing a silicone macromer having a quaternary ammonium cation site in a molecular chain in which a (meth)acrylic group is introduced in a high percentage at both terminals.

### MEANS FOR SOLVING THE PROBLEMS

As a result of diligent research to achieve the aforementioned purpose, the inventor found a production method to synthesize a silicone macromer having a quaternary ammonium cation site in a molecular chain in which a (meth)acrylic group is introduced in a high percentage at both terminals. The inventor synthesized a novel tertiary amino group-containing organopolysiloxane to be used as an intermediate compound of the production method, thereby completing the present invention.

That is, the present invention provides an organopolysiloxane having a tertiary amino group in a molecular chain represented by the following general formula (1): 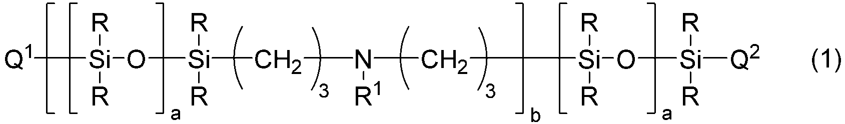 wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a hydrogen atom or a group represented by the following formula (2), at least one of Q¹ and Q² is a hydrogen atom; "a" is an integer of 1 to 400; and "b" is an integer of 1 to 50; 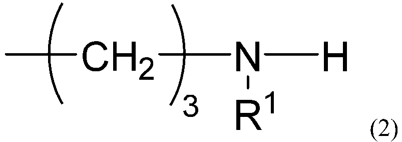 wherein, in formula (2), R¹ is a group selected from an alkyl group having 1 to 10 carbon atoms, an aryl group having 6 to 10 carbon atoms, and an aralkyl group having 7 to 10 carbon atoms.

Preferably, the organopolysiloxane further comprises the constituent feature of the following item [1] or [2].
[1] The organopolysiloxane, wherein, in said general formula (1), Q¹ and Q² both are a hydrogen atom.
[2] The organopolysiloxane, wherein, in said general formula (1), one of Q¹ and Q² is a hydrogen atom, and the other of Q¹ and Q² is a group represented by said formula (2).

The present invention further provides a method for producing an organopolysiloxane having a tertiary amino group in a molecular chain represented by the following general formula (1): 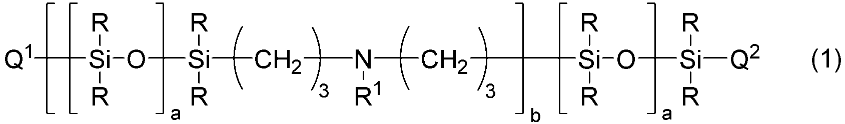 wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a hydrogen atom or a group represented by the following formula (2), at least one of Q¹ and Q² is a hydrogen atom; "a" is an integer of 1 to 400; and "b" is an integer of 1 to 50; 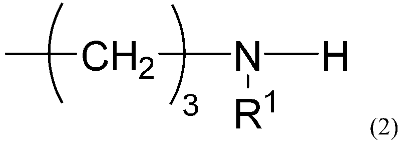 wherein, in formula (2), R¹ is, independently of each other, a group selected from an alkyl group having 1 to 10 carbon atoms, an aryl group having 6 to 10 carbon atoms, and an aralkyl group having 7 to 10 carbon atoms,
wherein the production method comprises a step of subjecting (A) a double-terminal hydrosilyl group-containing organohydrogen polysiloxane represented by the following general formula (3) to a reaction with (B) a tertiary amine having two allyl groups represented by the following general formula (4) in the presence of a platinum catalyst to obtain an organopolysiloxane represented by said general formula (1): 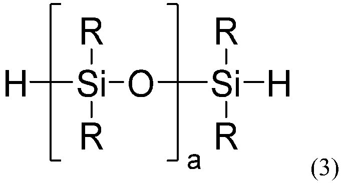 wherein, in general formula (3), R and "a" are as defined above; 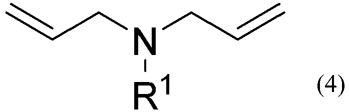 wherein, in general formula (4), R¹ is as defined above.

The present invention further provides the production method, wherein the organopolysiloxane represented by said general formula (1) has 1.5 to 2 terminal hydrosilyl groups as the average number of groups per molecule.

### EFFECTS OF THE INVENTION

The tertiary amino group-containing organopolysiloxane of the present invention is preferred as an intermediate compound for producing a silicone macromer having a quaternary ammonium cation site in a molecular chain in which a (meth)acrylic group is introduced in a high percentage at both terminals. Furthermore, according to the production method of the present invention, the tertiary amino group-containing organopolysiloxane can be efficiently produced. Furthermore, the tertiary amino group-containing organopolysiloxane of the present invention is useful as an intermediate for easily deriving not only the aforementioned silicone macromer, but also organopolysiloxanes having various reactive functional groups.

### BRIEF DESCRIPTION OF THE DRAWINGS

[FIG. 1]

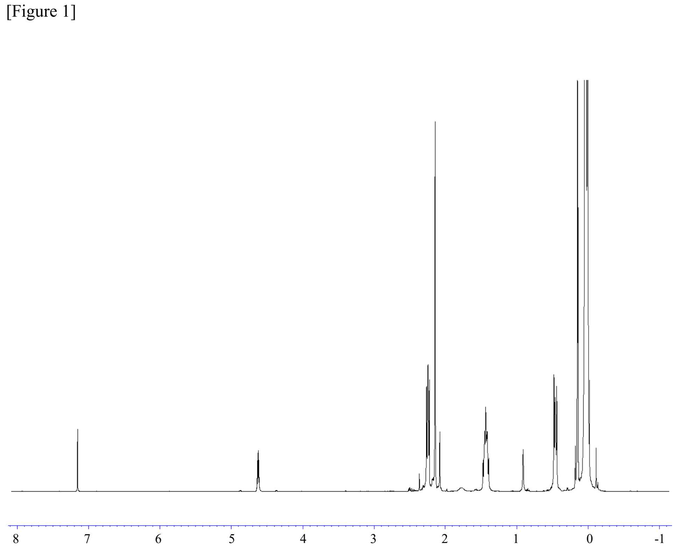

FIG. 1 is a ¹H-NMR spectral chart of an organopolysiloxane having a tertiary amino group in a molecular chain synthesized in Example 1.

### MODE FOR CARRYING OUT THE INVENTION

The present invention will be explained in detail below.

### [Organopolysiloxane having tertiary amino group in molecular chain]

An organopolysiloxane having a tertiary amino group of the present invention is represented by the following general formula (1).

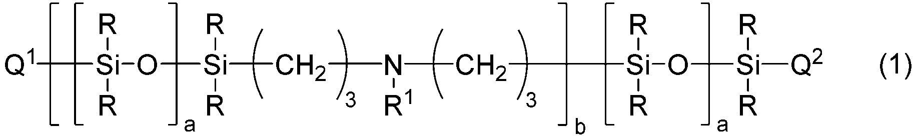

In said general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a hydrogen atom or a group represented by the following formula (2); "a" is an integer of 1 to 400; and "b" is an integer of 1 to 50.

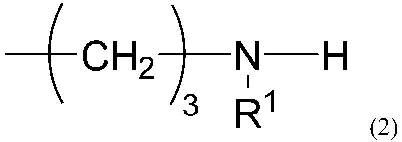

In said formula (2), R¹ is a group selected from an alkyl group having 1 to 10 carbon atoms, an aryl group having 6 to 10 carbon atoms, and an aralkyl group having 7 to 10 carbon atoms.

In said general formula (1), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R is preferably a methyl group and a phenyl group, more preferably a methyl group.

In said general formula (1) and formula (2), R¹ is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

In said general formula (1) and formula (2), R¹ is preferably a methyl group and an ethyl group, more preferably a methyl group.

In said general formula (1), Q¹ and Q² are, independently of each other, a hydrogen atom or a group represented by said formula (2).

In said general formula (1), "a" is an integer of 1 to 400, preferably an integer of 1 to 100, more preferably an integer of 5 to 50. "b" is an integer of 1 to 50, preferably an integer of 1 to 30, more preferably an integer of 1 to 10.

### [Method for producing organopolysiloxane having tertiary amino group in molecular chain]

A method for producing the organopolysiloxane having a tertiary amino group in the molecular chain represented by said general formula (1) will be explained in detail below.

The production method comprises a step of subjecting (A) a double-terminal hydrosilyl group-containing organohydrogen polysiloxane represented by the following general formula (3) to a reaction with (B) a tertiary amine having two allyl groups represented by the following general formula (4) in the presence of a platinum catalyst to obtain a compound represented by said general formula (1).

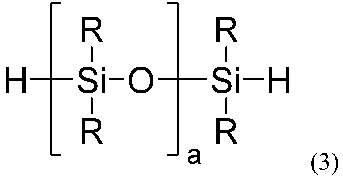

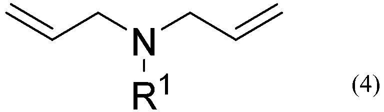

In said general formula (3), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group.

In said general formula (4), R¹ is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R¹ is preferably a methyl group and an ethyl group, more preferably a methyl group.

In said general formula (3), "a" is an integer of 1 to 400, preferably an integer of 1 to 100, more preferably an integer of 5 to 50.

In the production method of the present invention, an excessive equivalent of the double-terminal hydrogen-modified organopolysiloxane is used, relative to the tertiary amine having two allyl groups. The molar ratio determines "b" in said general formula (1) that is the number of repeats of the silicone chain and the tertiary amino group-containing site. The content ratio of the organopolysiloxane is preferably 1.05 to 2 molar equivalents, relative to the number of moles of tertiary amine.

The catalyst used in the production method of the present invention can be a known platinum catalyst. Particularly, a sodium bicarbonate-neutralized chloroplatinic acid-vinylsiloxane complex (Karstedt's Catalyst) is preferred. The amount of the catalyst is not particularly limited and may be any amount of the catalyst, but is preferably 10 to 1,000 ppm, relative to the weight of the double-terminal hydrogen-modified organopolysiloxane.

Reaction conditions of the production method of the present invention, such as the reaction time and the solvent used, are not particularly limited. The reaction time is preferably 1 to 24 hours, more preferably 1 to 12 hours, most preferably 1 to 6 hours. The solvent is preferably aromatic hydrocarbon solvents such as toluene and xylene.

The organopolysiloxane represented by said general formula (1) has a structure having a secondary amino terminal represented by said formula (2) at a terminal. This is because, in the production of the organopolysiloxane represented by said general formula (1), a tertiary amino terminal, in which a double bond undergoes internal rearrangement due to a platinum catalyst present at the terminal of the organopolysiloxane, is hydrolyzed in a post-treatment after the hydrosilylation reaction as shown by the following formula.

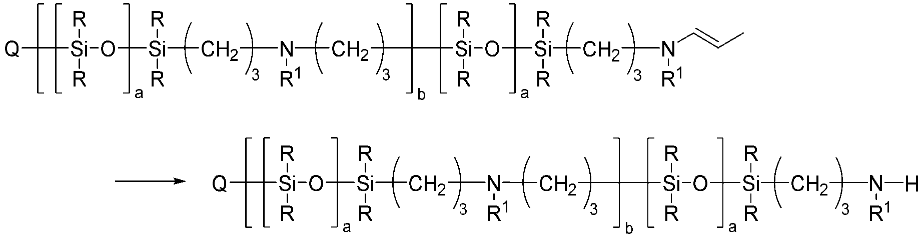

That is, in said general formula (1), Q¹ and Q² are, independently of each other, a hydrogen atom or a group represented by said formula (2). The organopolysiloxane of general formula (1) obtained by reacting a double-terminal hydrosilyl group-containing organohydrogen polysiloxane represented by said general formula (3) with a tertiary amine having two allyl groups represented by said general formula (4) is more preferably as shown in the following formula: 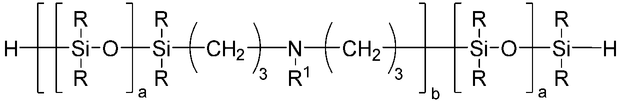 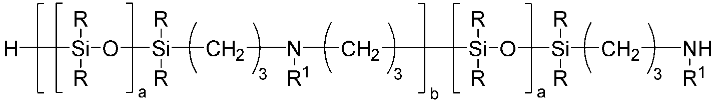 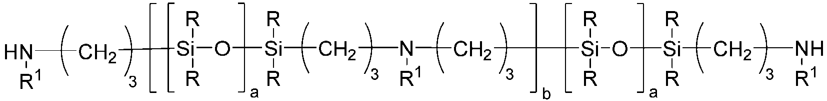 wherein an organopolysiloxane in which at least one of Q¹ and Q² is a silicon atom-bonded hydrogen atom is preferred, and an organopolysiloxane in which both Q¹ and Q² are a silicon atom-bonded hydrogen atom is more preferred. An organopolysiloxane in which both Q¹ and Q² are a hydrogen atom is a useful intermediate for providing a silicone macromer having a quaternary ammonium cation site in a molecular chain because a (meth)acrylic group can be introduced in a high percentage at both terminals.

Said general formula (1) may be a mixture of one, two, or more compounds selected from the aforementioned organopolysiloxanes. More preferably, in the organopolysiloxane, the number of hydrogen atoms bonded to a silicon atom is 0 to 2, preferably 1 to 2, more preferably 1.5 to 2, as the average number per molecule, and the number of groups represented by said formula (2) is 0 to 2, preferably 0 to 1, more preferably 0 to 0.5, as the average number per molecule.

### EXAMPLES

The present invention will be explained in more detail with reference to the following Examples, but the present invention is not limited to the following Examples.

¹H-NMR measurements in the following Examples were carried out using Ultrashield 400 Plus (manufactured by Bruker).

### [Example 1]

### Production of organopolysiloxane having tertiary amino group in molecular chain represented by said general formula (1)

In a three-necked flask equipped with a thermometer, a stirring device, and a reflux condenser, was placed 50.0 g of a double-terminal hydrosilyl group-containing organohydrogen polysiloxane represented by the following formula (a), 0.2 g of a solution of a sodium bicarbonate-neutralized chloroplatinic acid-vinylsiloxane complex in toluene (platinum content of 0.5 wt%) and 17 g of toluene, and heated to 70°C. 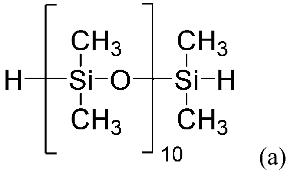 To the mixture, 5.3 g of diallylmethylamine was added dropwise over 30 minutes, followed by heating at 75°C for 2 hours with stirring. After the completion of the reaction, the low-boiling distillate fraction was removed at a reduced pressure of 0.2 kPa at 100°C for 1 hour. Then 25 g of acetonitrile and 6.3 g of water were added, and the reaction mixture was stirred, washed, and then left to stand, followed by fractionation of the silicone layer. The operation of phase separation and washing was repeated three times. The low-boiling distillate fraction was removed at a reduced pressure of 0.3 kPa at 85°C for 1.5 hours to obtain 24 g of an organopolysiloxane represented by the following formula (b): 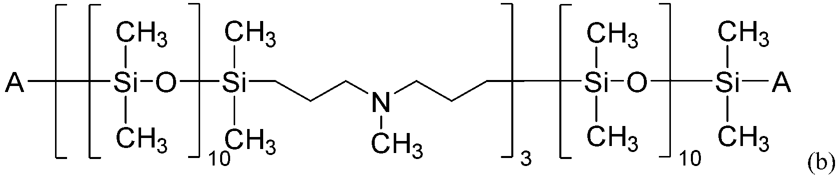 wherein, in formula (b), A is, independently of each other, a hydrogen atom or a group represented by the following formula (c) bonded to a silicon atom. The organopolysiloxane was a mixture of compounds having two or more different types of A, in which the number of hydrogen atoms bonded to a silicon atom was 1.8 as the average number per molecule, and the number of groups represented by the following formula (c) was 0.2 as the average number per molecule.

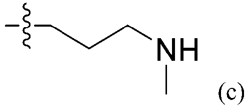

The following is the ¹H-NMR spectrum of the organopolysiloxane obtained in Example 1.

¹H-NMR (400MHz, CDCl₃):δ -0.23-0.20 (m, 264H), 0.33-0.50 (m, 12.4H), 1.32-1.48 (m, 12.4H), 2.01-2.51 (m, 21.4H), 4.58-4.68 (m, 1.8H)

According to the production method of the present invention, the aforementioned tertiary amino group-containing organopolysiloxane can be efficiently produced. The tertiary amino group-containing organopolysiloxane of the present invention is preferred as an intermediate compound for producing a silicone macromer having a quaternary ammonium cation site in a molecular chain in which a (meth)acrylic group is introduced in a high percentage at both terminals. Furthermore, the tertiary amino group-containing organopolysiloxane of the present invention is useful as an intermediate for easily deriving not only the aforementioned silicone macromer, but also organopolysiloxanes having various reactive functional groups.

## Claims

1. An organopolysiloxane having a tertiary amino group in a molecular chain represented by the following general formula (1): 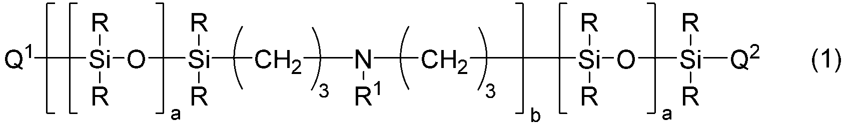 wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a hydrogen atom or a group represented by the following formula (2), at least one of Q¹ and Q² is a hydrogen atom; "a" is an integer of 1 to 400; and "b" is an integer of 1 to 50; 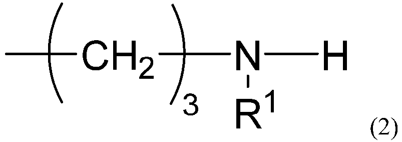 wherein, in formula (2), R¹ is a group selected from an alkyl group having 1 to 10 carbon atoms, an aryl group having 6 to 10 carbon atoms, and an aralkyl group having 7 to 10 carbon atoms.

2. The organopolysiloxane according to claim 1, wherein, in said general formula (1), Q¹ and Q² both are a hydrogen atom.

3. The organopolysiloxane according to claim 1, wherein, in said general formula (1), one of Q¹ and Q² is a hydrogen atom, and the other of Q¹ and Q² is a group represented by said formula (2).

4. A method for producing an organopolysiloxane having a tertiary amino group in a molecular chain represented by the following general formula (1): 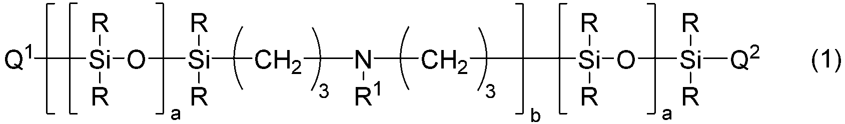 wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a hydrogen atom or a group represented by the following formula (2), at least one of Q¹ and Q² is a hydrogen atom; "a" is an integer of 1 to 400; and "b" is an integer of 1 to 50; 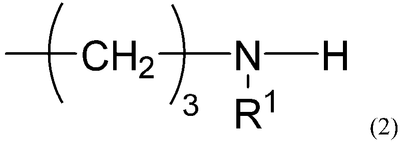 wherein, in formula (2), R¹ is, independently of each other, a group selected from an alkyl group having 1 to 10 carbon atoms, an aryl group having 6 to 10 carbon atoms, and an aralkyl group having 7 to 10 carbon atoms,
wherein the production method comprises a step of subjecting (A) a double-terminal hydrosilyl group-containing organohydrogen polysiloxane represented by the following general formula (3) to a reaction with (B) a tertiary amine having two allyl groups represented by the following general formula (4) in the presence of a platinum catalyst to obtain an organopolysiloxane represented by said general formula (1): 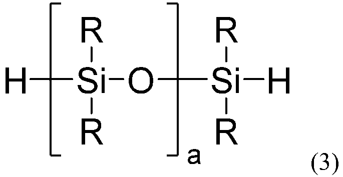 wherein, in general formula (3), R and "a" are as defined above; 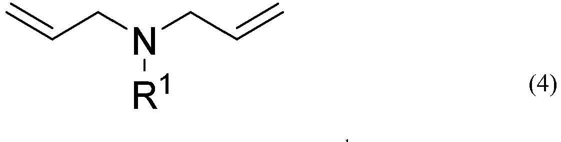 wherein, in general formula (4), R¹ is as defined above.

5. The production method according to claim 4, wherein the organopolysiloxane represented by said general formula (1) has 1.5 to 2 terminal hydrosilyl groups as the average number of groups per molecule.
